# EUROPÄISCHE PATENTANMELDUNG

(11) **EP 1 988 031 A1**
(43) Veröffentlichungstag der Anmeldung: **05.11.2008**
(21) Anmeldenummer: 08012957.0
(22) Anmeldetag: 10.01.2007
(51) Int. Cl.: B65D 71/50, B29C 45/26, B67B 7/18

(54) **Träger für Flaschen und dgl. Behälter mit Flaschenöffner**

(30) Priorität: 06.02.2006 DE 102006005311
(62) Teilanmeldung aus: 07000459.3
(71) Anmelder: Schoeller Arca Systems GmbH, 82049 Pullach (DE)
(72) Erfinder: Pranghofer, Stefanie, 80796 München (DE); Oster, Heinz, 82319 Starnberg (DE); Barth, Christian, 82049 Pullach (DE)
(74) Vertreter: Bockhorni & Kollegen

(57) **Zusammenfassung**

Die vorliegende Erfindung betrifft einen Träger (1) für die hängende Aufnahme von Flaschen und dgl. Behältern mit Schraubverschlüssen umfassend einen Tragbügel (3) und einen Tragkörper (2) mit randseitig ausgebildeten, insbesondere clipsartigen Aufnahmen (5) für die Flaschen. Der erfindungsgemäße Flaschenträger (1) weist mindestens einen an dem Träger (1) durch eine Öffnung (11) in dem Tragkörper (2) oder dem Tragbügel (3) ausgebildeten Flaschenöffner (10) auf, wobei die Innenumfangsfläche (12) der Öffnung (11) als Schraubverschluss-Drehmomentübertragungsfläche ausgebildet ist. Weiterhin betrifft die vorliegende Erfindung ein System aus dem Träger (1) und wenigstens einer darin aufgehängter Flasche und ein Verfahren zur Herstellung von Kunststoffkörpern, die zumindest einen Bereich mit einem dünnen Materialquerschnitt aufweisen, sowie ein Werkzeug zur Durchführung des Verfahrens.

## Beschreibung

Die vorliegende Erfindung betrifft ein Verfahren zur Herstellung von Kunststoffkörpern, die dünne Materialquerschnitte aufweisen, nach dem Oberbegriff von Anspruch 1 sowie eine Spritzgussform zur Durchführung des Verfahrens nach dem Oberbegriff von Anspruch 2.

Für den Transport von Verpackungsbehältern, insbesondere Getränkeflaschen, gibt es verschiedene Möglichkeiten. Üblich ist die Lagerung und der Transport der Getränkeflaschen in festen Flaschenkästen, wobei inzwischen auch Flaschenkästen Verwendung finden, die teilbar ausgebildet sind, so dass der Käufer die Flaschen komfortabel beidhändig tragen kann. Ebenfalls bekannt ist der Transport einiger weniger, beispielsweise sechs bis zehn, Flaschen hängend in einem Träger, der aus einem Tragkörper mit daran befindlichem Tragbügel gebildet ist. Dieser in der WO 2004/076310 vorgeschlagene Flaschenträger ermöglicht einen hängenden Transport der Flaschen, die in den Tragkörper an ihren Hälsen eingefügt und dann mit Hilfe des Tragbügels gleichzeitig angehoben und transportiert werden können. Eine verbesserte Ausführungsform eines solchen Flaschenträgers ist in der DE 20 2005 016 091 beschrieben. Dieser Flaschenträger weist einen einstückig über Filmscharniergelenkverbindungen mit dem Tragkörper aus- und einklappbar verbundenen Tragbügel auf, wodurch der Flaschenträger ein einfaches und bequemes Handling, aber auch eine gute und stabile Stapelung mehrerer mit Flaschen gefüllter Flaschenträger ermöglicht. Insbesondere ist der Flaschenträger trotz seines stabilen und robusten Aufbaus kostengünstig herstellbar. Im Zusammenhang mit dem Kostenfaktor ist die Herstellung eines solchen Flaschenträgers aus Polyethylen, insbesondere einem Polyethylen-Regenerat wirtschaftlich besonders vorteilhaft. Ein solcher Kunststoffflaschenträger stellt auch ein sehr gutes Werbemittel dar.

PET-Getränkeflaschen sind üblicherweise mit einem Drehverschluss verschlossen und weisen als Qualitätssiegel einen umlaufenden Ring auf, der sich nach dem erstmaligen Öffnen des Drehverschlusses von diesem wenigstens teilweise löst und so den Öffnungsvorgang eindeutig ausweist. Im Gegensatz zu Kronverschlüssen, die sich mittels Hebelwirkung nach oben hin öffnen lassen, können solche Drehverschlüsse nur mittels einer drehenden Bewegung des Verschlusses gegenüber der Flasche geöffnet werden. Diese Bewegung kann durch vielfältige Einflüsse erschwert sein, so dass unter Umständen für den Benutzer ein Öffnen der Flasche nicht oder nicht ohne weiteres möglich ist. Beispielsweise ist ein Öffnen des Drehverschlusses dann erschwert, wenn die den Verschluss greifende Hand oder der Verschluss selbst nicht ganz trocken sind oder wenn der Benutzer nicht in der Lage ist, ein genügend großes Drehmoment auf den Drehverschluss zu übertragen.

Aufgabe der vorliegenden Erfindung ist es zum einen, dem Benutzer von Getränkeflaschen mit Drehverschlüssen eine Vorrichtung zum leichten und ergonomischen Öffnen der Drehverschlüsse zur Verfügung zu stellen, wobei diese Vorrichtung einfach und kostengünstig herzustellen sein und dem Benutzer einfach zugeführt werden können soll. Weiterhin ist es Aufgabe der vorliegenden Erfindung, ein Verfahren und ein Werkzeug zum Ausführen des Verfahrens zur Verfügung zu stellen, mit dem sich Kunststoffkörper, die zumindest lokal dünne Materialquerschnitte aufweisen, auch mit hochviskosem Kunststoffmaterial einfach und ökonomisch herstellen lassen.

Diese Aufgaben werden gelöst mit einem Verfahren zur Herstellung von Kunststoffkörpern gemäß Anspruch 1 sowie einem Spritzwerkzeug gemäß Anspruch 2. In den abhängigen Unteransprüchen sind vorteilhafte Ausgestaltungen dieser Gegenstände angegeben.

Der erfindungsgemäße Flaschenträger zeichnet sich dadurch aus, dass an seinem Tragkörper zumindest ein Flaschenöffner ausgebildet ist, der eine Öffnung in dem Tragkörper oder dem Tragbügel umfasst, wobei die Innenfläche der Öffnung mit der Außenumfangsfläche des Drehverschlusses der Flasche in Kontakt bringbar ist und als Schraubverschluß-Drehmomentübertragungsfläche ausgebildet ist. Mit diesem Flaschenträger lässt sich ein besonders leichtes und ergonomisches Öffnen des Drehverschlusses ermöglichen, da über den Tragkörper des Flaschenträgers ein Hebel und dadurch eine Drehmomentverstärkung bereit gestellt wird, das Drehmoment sicher übertragen wird und die Hand des Benutzers am Tragkörper wesentlich besser angreifen kann und damit ein Abrutschen vermieden wird. Weiterhin lässt sich der Flaschenträger sehr kostengünstig herstellen und mit ihm wird dem Benutzer schon beim Einkauf der Getränkeflaschen der zugehörige Flaschenöffner bereitgestellt, so dass er keinen anderen parat haben muss.

Vorteilhaft ist die Schraubverschluss-Drehmomentübertragungsfläche als Kraftschluss-, insbesondere Reibschluss- und/oder Formschlussfläche gebildet, wodurch eine besonders sichere Kraftübertragung gewährleistet ist.

Wenn der Träger einstückig ausgebildet ist, kann er besonders kostengünstig hergestellt werden.

Bevorzugt ist die Öffnung mit einem im Wesentlichen kreisförmigen Querschnitt ausgebildet, da dadurch die mit kreisförmig ausgebildetem Querschnitt versehenen Drehverschlüsse längs ihrer Umfangsfläche gleichmäßig umfasst werden können. Insbesondere ist es hierbei bevorzugt, wenn sich der Durchmesser der Öffnung über den Querschnitt des Tragkörpers konisch verjüngt. Dadurch wird zum einen das Aufsetzen des Flaschenöffners auf den Drehverschluss erleichtert, da eine automatische Zentrierung erfolgt, andererseits ermöglicht die konische Formgebung der Öffnung die Verwendung des Flaschenöffners bei Drehverschlüssen mit unterschiedlichen Durchmessern, so dass quasi ein Universalöffner zur Verfügung gestellt wird.

Besonders bevorzugt sind an der Innenfläche der Öffnung nach Innen vorstehende Vorsprünge angeordnet, die insbesondere axial ausgerichtet sind. Diese Vorsprünge, die insbesondere lamellenartig ausgebildet sein können, ermöglichen ein besseres Eingreifen in den Drehverschluss, da diese Drehverschlüsse meistens entlang der Umfangsfläche radial verlaufende regelmäßige Einkerbungen aufweisen, die beim maschinellen Aufdrehen des Verschlusses auf die Flasche erforderlich sind. Andererseits ermöglichen die Vorsprünge bei den üblicherweise aus Kunststoff hergestellten Drehverschlüssen dadurch ein zusätzliches Verkrallen, dass sie sich radial in das Drehverschlussmaterial einkerben. In jedem Fall wird durch die Vorsprünge ein zahnklinkenartiges Verkrallen des Flaschenöffners mit dem Drehverschluss ermöglicht, wodurch sich höhere Drehmomente übertragen lassen.

Vorteilhaft kann zum erleichterten Aufschieben des Flaschenöffners auf den Drehverschluss vorgesehen sein, dass die Vorsprünge ein- oder beidseitig mit axial verlaufenden Rampen versehen sind, sich die Höhe des Vorsprungs also von einer Außenseite der Öffnung zum Inneren der Öffnung hin erweitert und so das Aufsetzen des Flaschenöffners auf dem Drehverschluss erleichtert wird.

Bei der Anordnung der Vorsprünge ist es bevorzugt, wenn diese schuppenförmig, insbesondere überlappend längs der Innenumfangsfläche angeordnet und insbesondere elastisch federnd ausgebildet sind, weil dann der Schraubverschluß besonders sicher vom Flaschenöffner erfaßt und gehalten wird. Außerdem ist es vorteilhaft, wenn die Vorsprünge sich entlang einer Sekante des Öffnungsquerschnitts, d. h. geneigt gegenüber dem Radius der Öffnung in Aufdrehrichtung des Drehverschlusses, also üblicherweise entgegen dem Uhrzeigersinn erstrecken. Auf diese Weise ist ein noch besserer Kraftschluss zwischen dem Drehverschluss und dem Flaschenöffner sicher gestellt, da die Vorsprünge sich in Kraftwirkungsrichtung beim Aufschrauben des Drehverschlusses erstrecken und sich beim Öffnen des Drehverschlusses von der Innenumfangsfläche gegen den Drehverschluss aufspreitzen und so noch besser verkrallen. Vorteilhaft sind die Vorsprünge in Umfangsrichtung der Öffnung gleichmäßig beabstandet angeordnet, da sich dadurch eine gleichmäßige Kraftverteilung auf den Drehverschluss ergibt.

Vorzugsweise weist der Flaschenträger eine rechteckige Form auf, wobei an einer bzw. beiden Schmalseiten des Rechtecks Flaschenöffner ausgebildet sind. Auf diese Weise entsteht ein relativ großer Hebel zur Drehmomentverstärkung über den Tragkörper zur Verfügung. Falls dieser Vorteil entbehrlich ist, kann es jedoch auch vorgesehen sein, dass ein Flaschenöffner im Wesentlichen mittig im Tragkörper angeordnet ist. Zweckmäßigerweise kann der Flaschenöffner auch in den clipsartigen Aufnahmen integriert bzw. ausgebildet sein, die mit ihren clipsartigen Schenkeln eine teilkreisförmige Öffnung mit einem Einführschlitz für das Einführen des Schraubverschlusses einer Flasche aufweisen. Hierbei ist es möglich, den vorzugsweise als Reibschlussund/ oder Formschlussfläche ausgebildeten Flaschenöffner nicht nur in einer clipsartigen Aufnahme sondern in mehreren insbesondere in allen clipsartigen Aufnahmen auszubilden. Durch Drehen der entsprechenden im Träger aufgehängten Flasche kann dann in einfacher Weise der üblicherweise mit einem bandartigen Sicherheitsverschluss ausgebildete Schraubverschluss geöffnet werden. Im Übrigen kann die Ausbildung der Öffnung des Flaschenöffners, die entweder kreisförmig oder teilkreisförmig ausgebildet sein kann, auch abschnittsweise über den Innenumfang der Öffnung vorgesehen seien.

Um eine besonders wirtschaftliche Herstellung des Flaschenträgers zu ermöglichen, ist dieser vorzugsweise Kunststoff, insbesondere aus einem recyclebaren Kunststoff hergestellt, wobei Polyethylen, insbesondere Polyethylen-Regenerat bevorzugt wird.

Das erfindungsgemäße System für die hängende Aufnahme von Flaschen und dgl. Behältern, die mit Schraubverschlüssen versehen sind, umfasst einen Flaschenträger aus einem Tragbügel und einem mit einer Aufnahmeeinrichtung für die hängende Aufnahme von Flaschen versehenen Tragkörper, mindestens eine in dem Tragkörper eingehängten Flasche mit einem Schraubverschluß und einen Flaschenöffner, wie er zuvor beschrieben wurde. Weiterhin für das System vorteilhaft eine Schrumpffolienverpackung oder eine Banderole vorgesehen sein, die die Flaschen oder die Flaschen und den Träger zumindest teilweise umschließen. Auf diese Weise ist das System noch stabiler ausgeführt und gegenüber einer unbeabsichtigten Flaschenentnahme gesichert.

Das erfindungsgemäße Verfahren zur Herstellung von Kunststoffkörpern, die wenigstens lokal einen oder mehrere dünne Materialquerschnitte aufweisen, besteht darin, dass am Beginn des Einspritzvorgangs die Spritzgussform wenigstens im Bereich der zu erhaltenden dünnen Materialquerschnitte einen Formspalt aufweist, der größer ist als zur Erzielung des dünnen Materialquerschnitts notwendig ist. Erst beim weiteren Verlauf des Befüllens der Spritzgussform bzw. nach dem Abschluss dieses Befüllens wird der Formspalt im Bereich der dünnen Materialquerschnitte verringert und so das Formteil mit den gewünschten Materialquerschnitten versehen. Auf diese Weise ist beim Beginn des Einfüllens der Spritzgussform sicher gestellt, dass auch bei hochviskosem Material, wie es Polyethylen-Regenerat darstellt, alle Bereiche der Spritzgussform mit Kunststoffmaterial ausgefüllt werden und sich keine Leerstellen ergeben. Der Kunststoffdurchsatz wird also im Bereich der dünnen Materialquerschnitte nicht durch einen engen Formspalt verringert bzw. verhindert, sondern der erforderliche schmale Formspalt wird erst dann eingestellt, wenn das vollständige Ausfüllen der Spritzgussform sichergestellt ist. Mit diesem Verfahren lassen sich auf besonders einfache und ökonomische Weise Flaschenträger aus Polyethylen-Regenerat herstellen, die einen über Filmscharniergelenkverbindungen mit dem Tragkörper einstückig verbundenen Trägerbügel aufweisen.

Bevorzugt wird hierbei nur der Formspalt im Bereich der zu erzielenden dünnen Materialquerschnitte verringert, es kann jedoch auch vorgesehen sein, dass der gesamte Formspalt der Spritzgussform, beispielsweise durch ineinander bewegliche Formteile, verringert wird.

Vorteilhaft wird der Formspalt jedoch durch Schieber, Stempel oder dgl. verändert, wobei die Schieber, Stempel oder dgl. bevorzugt hydraulisch angetrieben sind. Weiterhin ist es bevorzugt, wenn die Schieber, Stempel oder dgl. schräg zum Formspalt verschieblich sind, da dadurch ein größerer Verschiebeweg bereitgestellt wird und deshalb eine präzisere Einstellung des Formspalts ermöglicht wird als dies bei senkrecht zum Formspalt verschieblichen Schiebern, Stempeln oder dgl. der Fall ist.

Weiter Vorteile, Kennzeichen und besondere Merkmale der vorliegenden Erfindung werden im Folgenden im Zusammenhang mit der beigefügten Zeichnung beschrieben. Darin zeigen
- Fig. 1: einen Flaschenträger mit integriertem Flaschenöffner und
- Fig. 2: eine Spritzgussform mit einem verschieblichen Schieber.

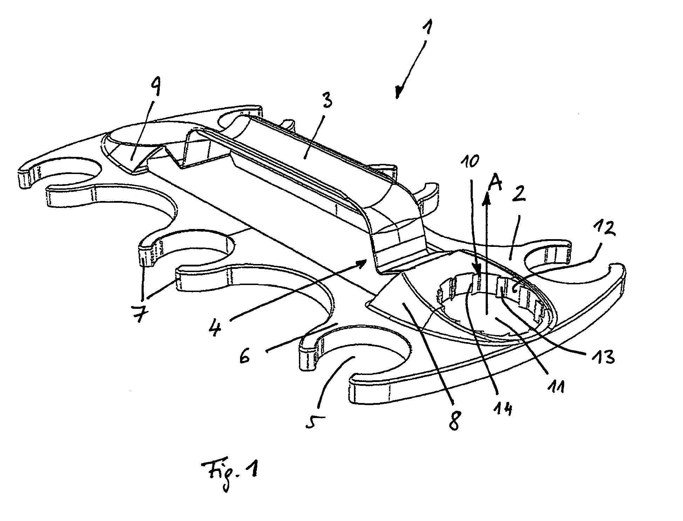

In Fig. 1 ist rein schematisch eine bevorzuge Ausführungsform des erfindungsgemäßen Flaschenträgers 1 dargestellt. Der Flaschenträger 1 besteht aus einem Tragkörper 2 und einem Tragbügel 3, der über eine Filmscharniergelenkverbindung 4 einstückig mit dem Tragkörper 2 verbunden ist. Der Flaschenträger 1 ist kostengünstig aus Polyethylen-Regenerat hergestellt und weist eine im Wesentlichen rechteckige Form auf, wobei jeweils gegenüberliegend an den Längsseiten des Tragkörpers 2 drei clipsartige Aufnahmen 5, in die Getränkeflaschen (nicht gezeigt) eingeclipst werden können, angeordnet sind. Üblicherweise verwendete Getränkeflaschen aus PET weisen einen Flaschenhals auf, an den sich ein sog. Neck-Ring, der als Kragen umfangsmäßig über dem Flaschenhals vorsteht, und oberhalb des Neck-Rings ein zylindrischer Bereich mit Außengewinde anschließt, auf dem der Drehverschluss befestigt ist. Nach dem Einclipsen der Getränkeflasche in die Aufnahme 5 stützt sich die Getränkeflasche mit dem Neck-Ring vertikal auf der Auflage 6 der Aufnahme 5 ab. Gegenüber einem seitlichen Herausgleiten aus der Aufnahme 5 ist die Flasche durch Umfangsvorsprünge 7 gesichert, die den Flaschenhals seitlich umfassen.

Der Tragkörper 2 weist jeweils zwei an den gegenüber liegenden Schmalseiten angeordnete Bereiche 8, 9 auf, die gegenüber dem übrigen Tragkörper 2 in Richtung auf den Tragbügel 3 ansteigend erhöht ausgebildet sind. Diese Bereiche 8, 9 können dabei gegenüber dem übrigen Tragkörper 2 eine größere Materialstärke aufweisen, jedoch ist es bevorzugt, wenn es sich um Ausformungen handelt, so dass die Stapelbarkeit mehrerer Flaschenträger 1 so erhalten bleibt, dass die Tragkörper 2 der Flaschenträger 1 im Wesentlichen aufeinander zu liegen kommen. Im Bereich 8 ist ein Flaschenöffner 10 vorgesehen, der durch eine Öffnung 11 mit im Wesentlichem kreisförmigem Querschnitt gebildet ist, wobei die umlaufende Innenfläche 12 der kreisförmigen Öffnung 11 sich in Pfeilrichtung A konisch verjüngt. Weiterhin sind an der Innenumfangsfläche 12 der kreisförmigen Öffnung 11 lamellenartige Vorsprünge 13 gleich beabstandet angeordnet, die parallel zur Pfeilrichtung A, d. h. axial verlaufen und in Bezug auf den Radius der kreisförmigen Öffnung 11 schräg geneigt angeordnet sind. Anders ausgedrückt sind die lamellenartigen Vorsprünge 13 jeweils entlang gleicher Sekanten angeordnet und weisen entgegen den Uhrzeigersinn.

Mit Hilfe des in den Flaschenträger 1 integrierten Flachenöffners 10 können nun Drehverschlüsse von Getränkeflaschen geöffnet werden. Dazu wird die Öffnung 11 des Flaschenöffners 10 auf dem Schraubverschluss der Getränkeflasche platziert und angedrückt und der Flaschenträger 1 entgegen dem Uhrzeigersinn gedreht, bis der Drehverschluss von der Getränkeflasche gelöst ist. Das Lösen des Drehverschlusses erfolgt aufgrund der folgenden Merkmale besonders einfach und ergonomisch. Zum einen wird durch die konische Ausformung der Öffnung 11 das Aufsetzen des Flaschenöffners 10 auf dem Drehverschluss erleichtert und nach erfolgtem Aufsetzen und Andrücken über die Vorsprünge 13 eine Klemmwirkung erzielt, die einen Reibschluss zwischen Flaschenöffner 10 und Drehverschluss sicherstellt. Zum andern erfolgt zwischen den üblicherweise bei solchen Drehverschlüssen vorhandenen axial ausgerichteten Rillen und den lamellenartigen Vorsprüngen 13 ein zahnradartiges Verkrallen, so dass zwischen Flaschenöffner 10 und Drehverschluss außerdem ein Formschluss besteht. Reibschluss und Formschluss zwischen Flaschenöffner 10 und Drehverschluss der Getränkeflasche lassen ein relativ großes Drehmoment übertragen, das über die Hebelwirkung des lang gestreckten Flaschenträgers 1 einfach bereit gestellt werden kann.

Zur Gewichtsersparnis bei dem Flaschenträger 1 und auch zum weiterhin vereinfachten Umgang mit dem Flaschenträger 1 als Flaschenöffner kann im Bereich 9 ein zweiter Flaschenöffner vorgesehen sein. Weiterhin kann vorgesehen sein, dass die vorderen Kanten 14 der Vorsprünge eine der Innenumfangsfläche 12 gleiche Konizität aufweisen, so dass das Aufschieben des Flaschenöffners 10 auf den Drehverschluss erleichtert wird. Zusätzlich zu dieser Konizität der Kante 14 kann diese im unteren Bereich eine Anphasung aufweisen, die als Aufschiebrampe beim Aufbringen des Flaschenöffners 10 auf den Drehverschluss fungiert.

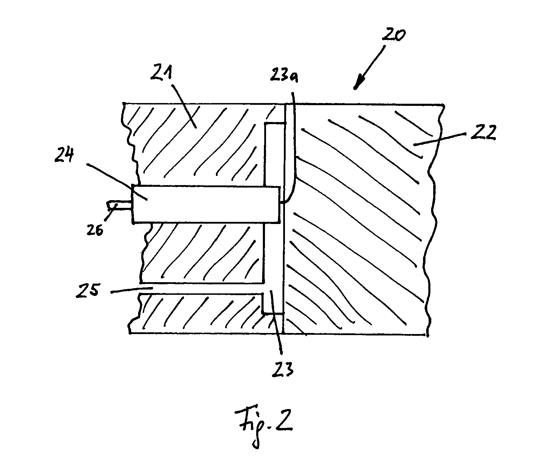

Üblicherweise weisen die Vorsprünge 13 solche Dimensionen auf, dass ihre Kanten 14 formschlüssig in die Rillen eines Drehverschlusses eingreifen. Insbesondere bei Drehverschlüssen aus Kunststoffmaterial kann es jedoch vorteilhaft sein, wenn die Vorsprünge 13 so dimensioniert, also vergrößert sind, dass die Kanten 14 nicht nur formschlüssig in die Rillen der Drehverschlüsse eingreifen, sondern ein zusätzlicher Einschneideffekt erzielt wird, so dass sich der Flaschenöffner 10 noch besser mit dem Drehverschluss verkrallt. Dieser Einschneideffekt wird zusätzlich durch eine Konizität der Kante 14 unterstützt. Somit kann der Flaschenträgers 1 als Flaschenöffner sowohl bei Flaschen mit Drehverschlüssen mit äußeren axial verlaufenden Rillen als auch solchen ohne Rillen, also mit glatter Oberfläche, verwendet werden. In Fig. 2 ist rein schematisch eine Spritzgussform 20 dargestellt, die aus zwei Formhälften 21, 22 besteht und zwischen den Formhälften 21, 22 einen Formspalt 23 aufweist. Innerhalb der Formhälfte 21 ist im Bereich 23a des Formspaltes 23 ein Schieber 24 verschieblich angeordnet, der lokal für eine Verringerung bzw. Erweiterung des Formspalts 23 sorgt. Zum Einspritzen der Kunststoffmasse ist eine Einspritzdüse bzw. -kanal 25 vorgesehen.

Mit der erfindungsgemäßen Spritzgussform 20 lassen sich nun Kunststoffkörper mit dünnen Materialquerschnitten auch dann ökonomisch herstellen, wenn als Kunststoff ein hochviskoses Material verwendet wird, wie beispielsweise Polyethylen-Regenerat. Im in der Fig. 2 dargestellten Beispiel erhält der hergestellte Kunststoffkörper eine Form entsprechend des Formspalts 23 und weist lokal im Bereich 23a des Formspalts 23 einen dünnen Materialquerschnitt auf, beispielsweise für ein Filmscharnier auf. Ohne den beweglichen Schieber 24 müsste das durch den Kanal 25 eingespritzte hochviskose Kunststoffmaterial den Engpass 23a im Formspalt 23 passieren, der bei Filmscharnieren im Bereich von einigen Zehntel Millimetern liegen kann. Ein solcher Kunststoffkörper lässt sich jedoch auf diese Weise nicht ökonomisch herstellen, da entweder sehr hohe Drücke und eine sehr große Zeit zum vollständigen Füllen des Formspalts 23 mit hochviskosem Kunststoffmaterial erforderlich sind, weil andernfalls die Kunststoffform nicht vollständig gefüllt wird.

Mit dem erfindungsgemäßen Verfahren und der erfindungsgemäßen Spritzgussform 20 werden diese Probleme dadurch gelöst, dass beim Einspritzen des Kunststoffmaterials in den Formspalt 23 über den Kanal 25 der Schieber 24, der bevorzugt über die Verbindung 26 hydraulisch betrieben wird (nicht gezeigt), in eine Position zurückgezogen wird, die für einen schnellen Durchfluss des Kunststoffmaterials durch den Formspalt 23 einen ausreichend großen lokalen Formspalt 23a bereitstellt. Im vorliegenden Beispiel könnte der Schieber 24 beispielsweise so weit zurückgeschoben werden, dass der Formspalt 23 über seinen gesamten Bereich ein gleichförmiges Maß aufweist.

Um eine präzisere Einstellung des lokalen Formspalts 23a zu erreichen, kann es vorgesehen sein, dass der Schieber 24 nicht senkrecht zum Formspalt 23 verläuft, sondern schräg dazu. Bei mehreren Bereichen mit geringer dimensionierten Formspalten 23a können mehrere Schieber 24 vorgesehen sein, die unabhängig voneinander, insbesondere aufeinander folgend, angesteuert werden können, so dass der Durchfluss des hochviskosen Kunststoffmaterials durch den Formspalt 23 optimal gewährleistet wird. Nachdem ausreichend Kunststoffmaterial in den Formspalt 23 eingefüllt ist, wird der Schieber 24 in eine Position verschoben, bei der der lokale Formspalt 23a das erforderliche Maß zur Herstellung des gewünschten dünnen Materialquerschnitts aufweist. Auf diese Weise ist sichergestellt, dass zum einen der Formspalt vollständig gefüllt wird und zum anderen dieses Füllen in einer relativ kurzen Zeit unter moderaten Einspritzmethoden erfolgen kann.

Insbesondere falls der gesamte Kunststoffkörper einen dünnen Materialquerschnitt aufweist, kann die Herstellung auch dadurch erfolgen, dass der Formspalt als Ganzes variabel gehalten wird. Dies kann zum einen dadurch bewerkstelligt werden, dass eine Formhälfte in der anderen verschieblich gehalten wird oder dass bei einer Formhälfte die den Formspalt begrenzende Seitenfläche Teil eines Schiebers oder einer Stempelfläche ist. Selbstverständlich können auch beide Formhälften solche verschieblichen Elemente aufweisen.

## Patentansprüche

1. Verfahren zur Herstellung von Kunststoffkörpern, die zumindest einen Bereich mit einem dünnen Materialquerschnitt aufweisen, insbesondere Flaschenträgern (1), deren Tragbügel (3) über Filmscharniere (4) am Tragkörper (2) einstückig befestigt sind, **dadurch gekennzeichnet, dass** beim Beginn des Einspritzvorgangs der Kunststoffmasse in die Spritzgussform (20) der Formspalt (23) zumindest im Bereich (23a) der herzustellenden dünnen Materialquerschnitte größer ist als für die dünnen Materialquerschnitte notwendig und während des weiteren Füllens der Spritzgussform (20) mit Kunststoffmasse oder nach Abschluss des Füllens der Spritzgussform (20) der Formspalt (23) zumindest im Bereich (23a) der herzustellenden dünnen Materialquerschnitte auf das zur Herstellung des Kunststoffkörpers erforderliche Maß verringert wird.

2. Spritzgussform (20) zur Durchführung des Verfahrens nach Anspruch 1 aus ein oder mehreren Formteilen (21, 22) und einem Formspalt (23), **dadurch gekennzeichnet, dass** zumindest in einem lokalen Bereich (23a) des Formspalts (23) Mittel (24) zur Erweiterung und Verringerung des Formspalts (23) vorgesehen sind.

3. Spritzgussform (20) nach Anspruch 2, **dadurch gekennzeichnet, dass** die Mittel zur Erweiterung und Verringerung des Formspalts ein oder mehrere Schieber (24), Stempel oder dgl. sind.

4. Spritzgussform (20) nach Anspruch 2, **dadurch gekennzeichnet, dass** zur Erweiterung und Verringerung des Formspalts (23) mindestens ein Formteil gegenüber den anderen beweglich ist.

5. Spritzgussform (20) nach Anspruch 3 oder 4, **dadurch gekennzeichnet, dass** die Schieber (24), Stempel oder dgl. bzw. die beweglichen Formteile hydraulisch angetrieben sind.

6. Spritzgussform (20) nach einem der Ansprüche 3 bis 5, **dadurch gekennzeichnet, dass** die Schieber (24), Stempel oder dgl. bzw. die beweglichen Formteile in Bezug auf den Formspalt (23) geneigt verschieblich sind.
